# EUROPÄISCHE PATENTSCHRIFT

(11) **EP 2 573 213 B1**
(45) Veröffentlichungstag und Bekanntmachung des Hinweises auf die Patenterteilung: **25.10.2017**
(21) Anmeldenummer: 12184663.8
(22) Anmeldetag: 17.09.2012
(51) Int. Cl.: C25B 11/04, C25B 1/46, C25B 11/03, H01M 4/86

(54) **SAUERSTOFFVERZEHRELEKTRODE UND VERFAHREN ZU IHRER HERSTELLUNG**
OXYGEN-CONSUMING ELECTRODE AND METHOD FOR ITS PRODUCTION
ELECTRODE CATALYTIQUE CONSOMMANT DE L'OXYGÈNE ET SON PROCÉDÉ DE FABRICATION

(30) Priorität: 23.09.2011 DE 102011083322
(43) Veröffentlichungstag der Anmeldung: 27.03.2013
(73) Patentinhaber: Covestro Deutschland AG, 51373 Leverkusen (DE)
(72) Erfinder: Bulan, Andreas, 40764 Langenfeld (DE); Weber, Rainer, 51519 Odenthal (DE); Albrecht, Sven, 38642 Goslar (DE); Meese-Marktscheffel, Juliane, 38642 Goslar (DE); Obrich, Armin, 38723 Seesen (DE)
(74) Vertreter: Levpat

(56) Entgegenhaltungen:
- EP-A2- 0 115 845
- EP-A2- 1 728 896
- WO-A1-01/93353
- WO-A2-03/004726
- DE-A1- 3 710 168
- DE-A1- 10 148 599
- JP-A- 56 142 881
- US-A1- 2005 050 990
- US-B2- 7 771 872

## Beschreibung

Die Erfindung betrifft eine Sauerstoffverzehrelektrode, insbesondere für den Einsatz in der Chloralkali-Elektrolyse, mit einer neuartigen Katalysatorbeschichtung auf Basis von Silber und eines feinteiligen Silberoxids sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zu Herstellung und Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, da die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Füssigkeitsraum voneinander getrennt bleiben. Die Langzeitstabilität und geringe Herstellkosten sind weitere besondere Anforderungen an eine technisch nutzbare Sauerstoffverzehrelektrode.

Eine Sauerstoffverzehrelektrode besteht typischerweise aus einem Trägerelement, zum Beispiel einer Platte aus porösem Metall oder Gewebe aus Metalldrähten, und einer elektrochemisch aktiven Beschichtung. Die elektrochemisch aktive Beschichtung ist mikroporös und besteht aus hydrophilen und hydrophoben Bestandteilen. Die hydrophoben Bestandteile erschweren das Eindringen von Elektrolyten und halten somit die entsprechenden Poren für den Transport des Sauerstoffs zu den katalytisch aktiven Zentren frei. Die hydrophilen Bestandteile ermöglichen das Eindringen des Elektrolyten zu den katalytisch aktiven Zentren und den Abtransport der Hydroxid-Ionen. Als hydrophobe Komponente wird in der Regel ein fluorhaltiges Polymer wie Polytetrafluorethylen (PTFE) eingesetzt, welches zudem als polymerer Binder des Katalysators dient. Bei Elektroden mit Silber-Katalysator dient das Silber als hydrophile Komponente. Bei kohlenstoffgeträgerten Katalysatoren wird als Träger ein Kohlenstoff mit hydrophilen Poren eingesetzt, durch welche der Flüssigkeitstransport erfolgen kann.

Die Reduktion des Sauerstoffs erfolgt in einem Dreiphasenbereich, in welchem Gasphase, Flüssigkeitsphase und fester Katalysator zusammentreffen.

Der Gastransport erfolgt durch die Poren in der hydrophoben Matrix. Die hydrophilen Poren füllen sich mit Flüssigkeit, über sie erfolgte der Transport des Wassers zu und der Hydroxid-Ionen von den katalytischen Zentren. Da sich Sauerstoff nur begrenzt in der wässrigen Phase löst, müssen genügend wasserfreie Poren zum Transport des Sauerstoffs zur Verfügung stehen.

Als Katalysator für die Reduktion von Sauerstoff sind eine Vielzahl von Verbindungen beschrieben.

So liegen Berichte über den Einsatz von Palladium, Ruthenium, Gold, Nickel, Oxiden und Sulfiden von Übergangsmetallen, Metall-Porphyrinen und Phthalocyaninen, und Pervoskiten als Katalysator für Sauerstoffverzehrelektroden vor.

Praktische Bedeutung als Katalysator für die Reduktion von Sauerstoff in alkalischen Lösungen haben jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Ein bekanntes erprobtes Trägermaterial ist Kohlenstoff. Kohlenstoff leitet elektrischen Strom zu dem Platin-Katalysator. Die Poren in den Kohlenstoff-Partikeln lassen sich durch Oxidation der Kohlenstoffoberfläche hydrophil einstellen und werden hierdurch geeignet für den Transport von Wasser. Die Beständigkeit kohlenstoffgeträgerter Platinelektroden im Dauerbetrieb ist jedoch unzureichend, vermutlich, weil durch Platin auch die Oxidation des Trägermaterials katalysiert wird. Die Oxidation des Trägermaterials führt zum Verlust der mechanischen Stabilität der Elektrode.

Silber hat ebenfalls eine hohe katalytische Aktivität für die Reduktion von Sauerstoff.

Silber kann gemäß dem Stand der Technik auch mit Kohlenstoff als Träger und auch als feinteiliges metallisches Silber eingesetzt werden.

SVE mit kohlenstoffgeträgertem Silber weisen üblicherweise Silber-Konzentrationen von 20 - 50 g/m² auf. Obwohl die kohlenstoffgeträgerten Silberkatalysatoren grundsätzlich haltbarer sind als die entsprechenden Platin-Katalysatoren, ist die Langzeitstabilität unter den Bedingungen der Chlor-Alkali-Elektrolyse beschränkt.

Die DE 10 148 599 A1 offenbart eine Sauerstoffverzehrelektrode und ein Verfahren zu deren Herstellung, wobei die Sauerstoffverzehrelektrode wenigstens einen elektrisch leitenden Träger, eine elektrische Kontaktstelle und eine Gasdiffusionsschicht mit einer katalytisch aktiven Komponente umfasst und wobei die Gasdiffusionsschicht mindestens ein fluorhaltiges Polymer, Silber in Form von Silberpartikeln und Silberoxid in Form von Silberoxidpartikeln umfasst.

Art und genauere Spezifikation des Silberoxids sind in der DE 10 148 599 A1 nicht erwähnt.

In der US 7 771 872 B2 wird die Prozessführung zur Fällung von Silberoxid beschrieben. Hierbei werden als Alternativen dem Fachmann entweder die Zugabe von einem festen Silber-Salz zu einer wässrigen Alkali-Lösung oder die gleichzeitige zu Zugabe von festem Silbersalz und Alkali in Wasser angeboten. Als bevorzugte Prozessführung gilt die gleichzeitige Zuführung von festem Silbersalz und Alkali in Wasser.

Eine gleichzeitige Zugabe einer wässrigen NaOH-Lösung und einer Silbernitrat-Lösung in ein Vorlagegefäß wird in US 7 771 872 B2 nicht erwähnt.

Gemäß US 7 771 872 B2 werden also nicht zwei Salzlösungen gleichzeitig in ein Vorlagegefäß eingespeist, sondern feste Salze in Wasser als Vorlage gegeben.

Die Aufgabe der vorliegenden Erfindung besteht darin, eine Sauerstoffverzehrelektrode, insbesondere für den Einsatz in der Chloralkali-Elektrolyse, bereitzustellen, in der Silberoxid eingesetzt wird, welches eine niedrigere Betriebsspannung bei der Chloralkali-Elektrolyse ermöglicht und durch dessen Herstellungsprozess die vorstehenden Nachteile überwunden werden.

Überraschenderweise wurde gefunden, dass die Verwendung eines Silberoxid als katalytisch aktives Material in Gasdiffusionselektroden und das hergestellt ist nach folgenden Schritten
(1) Fällung von Silberoxid in einer wässrigen NaOH-Lösung, (Hierbei wird über einen geeigneten Rührer eine definierte Rührenergie eingetragen, insbesondere über einen Propellerrührer, mit einer Rührerdrehzahl von 300 - 1000 U/min, der pH wird konstant gehalten im Bereich von pH 10 bis 12, bevorzugt bei pH 11 und die Temperatur wird in einem Bereich von 20°C bis 80°C, bevorzugt 30°C bis 70°C gehalten.)
(2) Filtrieren und Waschen des Filterkuchens (Dieser Schritt wird gegebenenfalls mehrmals wiederholt. Nach dem letzten Waschen wird die Suspension noch einmal filtriert),
(3) Trocknung des Filterkuchens unter Inertgas, z.B. Stickstoff oder Edelgas im Trockenschrank gegebenfalls bei vermindertem Druck (5 bis 1000 mbar) bei einer Temperatur im Bereich von 80°C bis 200°C und Weiterverarbeitung des entstandenen Silberoxids nach ausgewählten Herstellverfahren zu einer SVE,
zu geringeren Zellspannungen bei der Chloralkali-Elektrolyse führt.

Gegenstand der Erfindung ist ein Verfahren zur Herstellung einer Sauerstoffverzehrelektrode mit den Schritten:
a) Fällung von Silberoxid indem in ein Vorlagegefäß gleichzeitig eine wässrige NaOH-Lösung und eine Silbernitrat-Lösung zugegeben wird, wobei über einen mechanischen Rührer eine Rührenergie im Bereich von 0,01 W/l bis 10 W/l, bevorzugt 0,05 W/l bis 5 W/l und besonders bevorzugt 0,1 bis 2 W/l eingetragen wird, wobei der pH konstant im Bereich von pH 10 bis 12 gehalten wird, und die Temperatur in einem Bereich von 20°C bis 80°C gehalten wird,
b) Abtrennen des gefällten Silberoxids aus Schritt a) von der Suspension, insbesondere durch ein- oder mehrfaches Filtrieren der Suspension und Waschen des Silberoxids,
c) Trocknung des Silberoxids bei einer Temperatur im Bereich von 80°C bis 200°C gegebenenfalls unter Inertgasatmosphäre oder/und bei vermindertem Druck,
d) Weiterverarbeitung des entstandenen Silberoxids mit einem elektrisch leitenden Trägermaterial, einem Silberpartikel enthaltenden Katalysator und einem feinteiligen fluorhaltigen Polymeren zu einer flächigen Sauerstoffverzehrelektrode.

Geeignete Inertgase sind beispielsweise Stickstoff oder Edelgase.

Bevorzugt ist ein Verfahren bei dem das Silberoxid aus dem Schritt c) einen d90-Wert kleiner als 13 µm aufweist. Gegenstand der Erfindung ist auch eine Sauerstoffverzehrelektrode, wenigstens umfassend einen elektrisch leitenden Träger, eine elektrische Kontaktstelle und eine Gasdiffusionsschicht mit einer katalytisch aktiven Komponente, wobei die Gasdiffusionsschicht mindestens ein fluorhaltiges Polymer, Silber in Form von Silberpartikeln und Silberoxid in Form von Silberoxidpartikeln aufweist, hergestellt nach dem erfindungsgemäßen Verfahren.

Vorteilhafterweise erfolgt der Energieeintrag in Schritt a) bevorzugt über einen Propellerrührer, bevorzugt betrieben mit einer Rührerdrehzahl von 300 - 1000 U/min.

Insbesondere bevorzugt beträgt der Energieeintrag in Schritt a) 0,01 bis 1 kWh pro kg gefälltes Produkt.

Eine bevorzugte Variante des neuen Verfahrens ist dadurch gekennzeichnet, dass die Mischung in Schritt a) in einem Bereich von pH 10,5 bis 11,5 gehalten wird.

In einer weiteren bevorzugten Ausführung der Erfindung wird die Temperatur der Mischung in Schritt a) in einem Bereich von 30°C bis 70°C gehalten.

Besonders bevorzugt wird das Verfahren so geführt dass das Silberoxid aus dem Schritt c) einen d90-Wert kleiner als 13 µm aufweist.

Bevorzugt ist auch eine Sauerstoffverzehrelektrode, dadurch gekennzeichnet, dass sie Silberoxidpartikel mit einem d90-Wert kleiner als 13 µm enthält.

Eine weitere besonders bevorzugte Ausführung des neuen Verfahrens ist dadurch gekennzeichnet, dass bei der Weiterverarbeitung d) 0,5 bis 20 Gewichtsteile, bevorzugt 2 bis 10 Gewichtsteile des fluorhaltigen Polymers, 1 bis 20 Gewichtsteile, bevorzugt 2 bis 10 Gewichtsteile Silber in Form von Silberpartikeln und 60 bis 98,5 Gewichtsteile, bevorzugt 70 bis 95 Gewichtsteile Silberoxid in Form von Silberoxidpartikeln eingesetzt werden.

Bevorzugt wird ungeträgertes Silber als Katalysator eingesetzt. Bei SVE mit Katalysatoren aus ungeträgertem metallischem Silber treten naturgemäß keine Stabilitätsprobleme durch Zersetzung des Katalysatorträgers auf.

Bei der Herstellung von SVE mit ungeträgerten Silber-Katalysator wird das Silber bevorzugt zumindest teilweise in Form von Silberoxiden eingebracht werden, welche dann zu metallischem Silber reduziert werden. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur

Bei der Fertigung von Sauerstoffverzehrelektroden mit Silber-Katalysator kann man prinzipiell zwischen trockenen und nassen Fertigungsverfahren unterscheiden.

Bei den trockenen Verfahren wird ein Gemisch aus Katalysator und polymerer Komponente (meistens PTFE) zu feinen Partikeln gemahlen, welche anschließend auf ein elektrisch leitendes Trägerelement verteilt und bei Raumtemperatur verpresst werden. Ein solches Verfahren ist beispielsweise in EP 1728896 A2 beschrieben.

Bei den nassen Fertigungsverfahren wird entweder eine Paste oder eine Suspension bestehend aus Katalysator und polymerer Komponente in Wasser oder einer anderen Flüssigkeit verwendet. Bei der Herstellung der Suspension können oberflächenaktive Substanzen zugegeben werden, um deren Stabilität zu erhöhen. Eine Paste wird anschließend über Siebdruck oder Kalandrieren auf den Träger aufgebracht, während die weniger viskose Suspension üblicherweise aufgesprüht wird. Der Träger mit der aufgebrachten Paste bzw. Suspension wird getrocknet und gesintert. Die Sinterung erfolgt bei Temperaturen im Bereich des Schmelzpunktes des Polymers. Weiterhin kann eine Verdichtung der SVK nach dem Sintern auch bei höherer Temperatur (bis zum Schmelzpunkt, Erweichungs- oder Zersetzungspunkt des Polymers) als Raumtemperatur erfolgen.

Die nach diesen Verfahren hergestellten Elektroden werden ohne vorherige Reduktion der Silberoxide in den Elektrolyseur eingebaut. Die Reduktion der Silberoxide zu metallischem Silber erfolgt nach Befüllen des Elektrolyseurs mit den Elektrolyten unter Einwirkung des Elektrolysestroms.

Verschiedene Veröffentlichungen beschreiben die Herstellung von Silberoxid auf Basis einer Fällung unter Einsatz von Silbernitrat und Natronlauge. US771872B2 beschreibt beispielsweise die Herstellung und Verwendung von Silberoxid-Pulvern für Knopfzellen. Das Verfahren besteht hierbei im Wesentlichen aus 4 Schritten, der Fällung unter Mischung von wässrigen Lösungen eines Silbernitrats und Natronlauge mit einer langen Nachrührzeit von mindestens 30 min (im Falle des Beispiels mit der besten Perfomance sogar 12h), der Filtration dieser Suspension und der anschließenden Trocknung unter Temperatur und Vakuum. Die so hergestellten Pulver hatten d50-Werte zwischen 1 und 500 µm und eine BET-Oberfläche kleiner als 5 m²/g. Nachteil dieses Herstellprozesses ist eine extrem lange Nachrührzeit, die in einem Herstellprozess im Industriemaßstab die Herstellzeiten erheblich verlängert. Weiterer Nachteil ist, dass in einer solchen langen Nachrührzeit einzelne Partikel lange wachsen können, was zu Partikeln mit hohem Durchmesser (oberhalb von 50 µm) führen kann, die bei der anschließenden Weiterverarbeitung in z.B. einem Herstellprozess einer SVE wie beschrieben in EP1728896 durch Walzen zu unerwünscht hohen Presskräften führen kann.

In US20050050990 werden unterschiedliche Verfahren zur Herstellung von feinen SilberoxidPartikeln beschrieben, bei denen entweder ein Dispersionsmittel währen der Fällung zugegeben wird oder Natronlauge und Silbernitrat-Lösung für die Fällung simultan in eine Natronlauge-Vorlage dosiert werden. Hierbei wurden die Pulver nach der Fällung, Filtration und Trocknung noch einer Nassmahlung unterzogen. Hierbei werden Silberoxid-Partikel erzeugt deren d50-Wert unterhalb von 3 µm und deren d90-Wert unterhalb von 8 µm liegen mit einer BET-Oberfläche oberhalb von 0,9 m²/g. Beide erwähnte Verfahren enthalten Nachteile gegenüber dem in diesem Patent beschriebenen Verfahren. Im ersten Verfahren wird zusätzlich ein Dispersionsmittel zugegeben, welches anschließend wieder entfernt werden muss, im zweiten Verfahren muss die Dosierung der beiden Lösungen simultan verlaufen, was einen erhöhten Dosieraufwand entspricht. Weiterhin ist mit dem Nassmahlverfahren noch ein zusätzlicher Verfahrensschritt enthalten.

Hierbei und im Nachfolgenden bedeutet der d50-Wert, den Durchmesser einer volumenbasierten Partikelgrößenverteilung unterhalb dem 50% aller gemessenen Partikeldurchmesser einer Partikelgrößenverteilung liegen. Typischerweise wird die Partikelgrößenverteilung mittels eines Laserbeugungsspektrometers bestimmt (z.B. MS 2000 Hydro S). Bei der Messung liegt das Pulver typischerweise in Wasser dispergiert unter Einsatz eines Tensid, z.B. Tween 80, vor. die Dispersion wird typischerweise mittels einer Ultraschallbehandlung von 15 - 300 s Dauer durchgeführt. Der Ausdruck d90-Wert entspricht analog dem Durchmesser einer volumenbasierten Partikelgrößenverteilung unterhalb dem 90% aller gemessenen Partikeldurchmesser einer Partikelgrößenverteilung liegen.

Des Weiteren bedeutet hierbei und im Nachfolgenden BET-Oberfläche, die spezifische Oberfläche eines Feststoffes gemessen nach DIN ISO 9277 in m²/g.

Die spezifische Herstellung des silberoxidhaltigen Sauerstoffverzehrelektrode erfolgt z. B. mit den an sich bekannten oben beschriebenen Techniken im Nass- oder Trockenherstellungsverfahren. Das Trockenherstellungsverfahren wird hierbei bevorzugt eingesetzt, da dieses Verfahren ohne einen Sinterungszwischenschritt auskommt.

In einer besonders vorteilhaften Ausführung der Erfindung ist das neue Verfahren so gestaltet, dass bei der Weiterverarbeitung d) das Trockenherstellungsverfahren, insbesondere durch Verpressen einer pulverförmigen Mischung von Silberoxid, einem Silberpartikel enthaltenden Katalysator und einem feinteiligen fluorhaltigen Polymeren mit einem elektrisch leitenden Trägermaterial zu einer flächigen Sauerstoffverzehrelektrode, angewendet wird.

Es wird noch eine Sauerstoffverzehrelektrode beschrieben, wenigstens umfassend einen elektrisch leitenden Träger, eine elektrische Kontaktstelle und eine Gasdiffusionsschicht mit einer katalytisch aktiven Komponente, wobei die Gasdiffusionsschicht mindestens ein fluorhaltiges Polymer, Silber in Form von Silberpartikeln und Silberoxid in Form von Silberoxidpartikeln, hergestellt nach dem neuen oben beschriebenen erfindungsgemäßen Verfahren.

Bevorzugt umfasst die Zusammensetzung der Sauerstoffverzehrelektrode 0,5 bis 20 Gewichtsteile, bevorzugt 2 bis 10 Gewichtsteile des fluorhaltigen Polymers, 1 bis 20 Gewichtsteile, bevorzugt 2 bis 10 Gewichtsteile Silber in Form von Silberpartikeln und 60 bis 98,5 Gewichtsteile, bevorzugt 70 bis 95 Gewichtsteile Silberoxid in Form von Silberoxidpartikeln wie oben beschrieben.

Eine bevorzugte Ausführung der Sauerstoffverzehrelektrode ist dadurch gekennzeichnet, dass sie Silberoxidpartikel mit einem d90-Wert kleiner als 13 µm enthält.

Die Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode bevorzugt als Kathode in einer Brennstoffzelle geschaltet werden.

Die Sauerstoffverzehrelektrode findet Verwendung zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der ChlorAlkalielektrolyse, insbesondere zur Elektrolyse von LiCl, KCl oder NaCl.

Die SVE wird besonders bevorzugt bei der Chlor-Alkali-Elektrolyse und hier insbesondere bei der Natriumchlorid-(NaCl)-Elektrolyse eingesetzt.

Es wird noch eine Elektrolysezelle beschrieben für die Elektrolyse von Alkalichloriden, bevorzugt von Natriumchlorid oder Kaliumchlorid, besonders bevorzugt von Natriumchlorid, dadurch gekennzeichnet, dass sie eine Sauerstoffverzehrelektrode wie zuvor beschrieben als Kathode enthält.

Die Erfindung wird nachfolgend durch die Beispiele, welche jedoch keine Beschränkung der Erfindung darstellen, näher erläutert.

### Beispiele

### Beispiel 1

Es wurden zunächst Lösungen aus NaOH in Wasser mit einer Konzentration von 120 g/l und Silbernitrat in Wasser in einer Konzentration von 2,6 mol/l angesetzt. In einem Batchreaktor, der mit einem Propellerrührer bei 800 U/min gerührt wurde, wurden die beiden Ausgangslösungen innerhalb von 2 Stunden bei 60 °C so zudosiert, dass ein pH-Wert von 11,2 eingehalten wurde. Das Gesamtfüllvolumen des Batchreaktors lag hierbei bei 1,51. Die Mischung wurde noch für 15 min bei gleicher Temperatur nachgerührt.

Die Suspension wurde anschließend filtriert, der Filterkuchen mehrfach gewaschen und anschließend getrocknet.

Für das so hergestellt Pulver wurde nach einer Ultraschallbehandlung (5 Minuten im Ultraschallbad) ein d90-Wert von 12,7 µm bestimmt.

0,16 kg einer Pulvermischung, bestehend aus 7 Gew.-% PTFE-Pulver Dyneon Typ TF2053Z, 86 Gew.-% Silber-I- Oxid, hergestellt nach obigem Herstellprozess und 7 Gew.-% Silberpulver des Typs 331 der Fa. Ferro wurden in einem Mischer der Fa. IKA 4 mal für je 15 s gemischt. Die Temperatur der Pulvermischung blieb während des Vorgangs unter 50°C. Nach dem Mischen wurde die Pulvermischung mit einer Maschenweite von 1,0 mm gesiebt.

Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,26 kN/cm verpresst. Der Walzenpresse wurde die Sauerstoffverzehrelektrode entnommen.

Die so hergestellte Sauerstoffverzehrelektrode wurde bei der Elektrolyse einer NatriumchloridLösung (Konzentration von 210 g/l) mit einer Ionenaustauschermembran von DuPONT N982WX und einem Natronlaugespalt zwischen SVE und Membran von 3 mm eingesetzt. Die Elektrolyttemperatur betrug 90°C, die Natronlauge-Konzentration war 32 Gew.-%. Der Sauerstoff mit einer Reinheit von 99,5% wurde auf der dem Natronlaugespalt abgewandten Seite der SVE zudosiert. Als Anode wurde ein Streckmetall aus Titan beschichtet mit Ruthenium enthaltendem Edelmetallmischoxid (Hersteller: De Nora, Typ LZM) eingesetzt. Die aktiven Elektrodengrundflächen sowie auch die Membrangrundfläche betrugen jeweils 100 cm². Der Natronlauge-Durchfluss und der Sole Durchfluss lagen jeweils zwischen 5 und 10 1/h und der Sauerstoff-Durchfluss lag zwischen 45 und 55 1/h.

Bei einer Stromdichte von 4 kA/m² wurden eine Zellspannung von 2,03 V gemessen.

### Vergleichsbeispiel 1 marktübliches Silberoxid

0,16 kg einer Pulvermischung, bestehend aus 7 Gew.-% PTFE-Pulver Dyneon Typ TF2053Z, 86 Gew.-% Silber-I- Oxid von der Firma Umicore Brasilien (Batch Nr. 1828785) und 7 Gew.-% Silberpulver des Typs 331 der Fa. Ferro wurden in einem Mischer der Fa. IKA 4 mal für je 15 s gemischt. Die Temperatur der Pulvermischung blieb während des Vorgangs unter 50°C. Nach dem Mischen wurde die Pulvermischung mit einer Maschenweite von 1,0 mm gesiebt.

Die gesiebte Pulvermischung wurde anschließend auf ein Netz aus Nickeldrähten mit einer Drahtdicke von 0,14 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,25 kN/cm verpresst. Der Walzenpresse wurde die Sauerstoffverzehrelektrode entnommen.

Die so hergestellte Sauerstoffverzehrelektrode wurde bei der Elektrolyse wie in Beispiel 1 beschrieben eingesetzt.

Bei einer Stromdichte von 4 kA/m² wurden eine Zellspannung von 2,09 V gemessen, die deutlich oberhalb der Zellspannung in Beispiel 1 liegt.

## Patentansprüche

1. Verfahren zur Herstellung einer Sauerstoffverzehrelektrode mit den Schritten:
a) Fällung von Silberoxid indem in ein Vorlagegefäß gleichzeitig eine wässrige NaOH-Lösung und eine Silbernitrat-Lösung zugegeben wird, wobei über einen mechanischen Rührer eine Rührenergie im Bereich von 0,01 W/l bis 10 W/l eingetragen wird, wobei der pH konstant im Bereich von pH 10 bis 12 gehalten wird, und die Temperatur in einem Bereich von 20°C bis 80°C gehalten wird,
b) Abtrennen des gefällten Silberoxids aus Schritt a) von der Suspension und Waschen des Silberoxids,
c) Trocknung des Silberoxids bei einer Temperatur im Bereich von 80°C bis 200°C,
d) Weiterverarbeitung des entstandenen Silberoxids mit einem elektrisch leitenden Trägermaterial, einem Silberpartikel enthaltenden Katalysator und einem feinteiligen fluorhaltigen Polymeren zu einer flächigen Sauerstoffverzehrelektrode.

2. Verfahren nach Anspruch 1, **dadurch gekennzeichnet, dass** der Energieeintrag in Schritt a) über einen Propellerrührer erfolgt.

3. Verfahren nach Anspruch 1 oder 2, **dadurch gekennzeichnet, dass** der Energieeintrag in Schritt a) 0,01 bis 1 kWh pro kg gefälltes Produkt beträgt.

4. Verfahren nach einem der Ansprüche 1 bis 3, **dadurch gekennzeichnet, dass** die Mischung in Schritt a) in einem Bereich von pH 10,5 bis 11,5 gehalten wird.

5. Verfahren nach einem der Ansprüche 1 bis 4, **dadurch gekennzeichnet, dass** die Temperatur der Mischung in Schritt a) in einem Bereich von 30°C bis 70°C gehalten wird.

6. Verfahren nach einem der Ansprüche 1 bis 5, **dadurch gekennzeichnet, dass** das Silberoxid aus dem Schritt c) einen d90-Wert kleiner als 13 µm aufweist.

7. Verfahren nach einem der Ansprüche 1 bis 6, **dadurch gekennzeichnet, dass** bei der Weiterverarbeitung d) 0,5 bis 20 Gewichtsteile des fluorhaltigen Polymers, 1 bis 20 Gewichtsteile Silber in Form von Silberpartikeln und 60 bis 98,5 Gewichtsteile Silberoxid in Form von Silberoxidpartikeln eingesetzt werden.

8. Verfahren nach einem der Ansprüche 1 bis 7, **dadurch gekennzeichnet, dass** bei der Weiterverarbeitung d) das Trockenherstellungsverfahren durch Verpressen einer pulverförmigen Mischung von Silberoxid, einem Silberpartikel enthaltenden Katalysator und einem feinteiligen fluorhaltigen Polymeren mit einem elektrisch leitenden Trägermaterial zu einer flächigen Sauerstoffverzehrelektrode, angewendet wird.

## Claims

1. Process for producing an oxygen-consuming electrode, comprising the steps of:
a) precipitating silver oxide by simultaneously adding an aqueous NaOH solution and a silver nitrate solution to a receiver vessel, using a mechanical stirrer to introduce a stirring energy in the range from 0.01 W/l to 10 W/l, in the course of which the pH is kept constant within the range from pH 10 to 12, and the temperature is kept within a range from 20°C to 80°C,
b) removing the precipitated silver oxide from step a) from the suspension and washing the silver oxide,
c) drying the silver oxide at a temperature in the range from 80°C to 200°C,
d) further processing the resulting silver oxide with an electrically conductive carrier material, a catalyst comprising silver particles, and a finely divided fluorinated polymer to give a flat oxygen-consuming electrode.

2. Process according to Claim 1, **characterized in that** the energy is introduced in step a) by means of a propeller stirrer.

3. Process according to Claim 1 or 2, **characterized in that** the energy input in step a) is 0.01 to 1 kWh per kg of precipitated product.

4. Process according to any of Claims 1 to 3, **characterized in that** the mixture in step a) is kept within a range from pH 10.5 to 11.5.

5. Process according to any of Claims 1 to 4, **characterized in that** the temperature of the mixture in step a) is kept within a range from 30°C to 70°C.

6. Process according to any of Claims 1 to 5, **characterized in that** the silver oxide from step c) has a d90 of less than 13 µm.

7. Process according to any of Claims 1 to 6, **characterized in that**, in the further processing step d), 0.5 to 20 parts by weight of the fluorinated polymer, 1 to 20 parts by weight of silver in the form of silver particles, and 60 to 98.5 parts by weight of silver oxide in the form of silver oxide particles are used.

8. Process according to any of Claims 1 to 7, **characterized in that**, in the further processing step d), the dry production process is employed by pressing a pulverulent mixture of silver oxide, a catalyst comprising silver particles, and a finely divided fluorinated polymer with an electrically conductive carrier material to give a flat oxygen-consuming electrode.

## Revendications

1. Procédé pour la préparation d'une électrode consommant de l'oxygène, présentant les étapes de :
a) précipitation d'oxyde d'argent en ce qu'on introduit, dans un récipient, simultanément une solution aqueuse de NaOH et une solution de nitrate d'argent, une énergie d'agitation dans la plage de 0,01 W/l à 10 W/l étant introduite via un agitateur mécanique, le pH étant maintenu constant dans la plage de pH 10 à 12 et la température étant maintenue dans une plage de 20°C à 80°C,
b) séparation de l'oxyde d'argent précipité de l'étape a) de la suspension et lavage de l'oxyde d'argent,
c) séchage de l'oxyde d'argent à une température dans la plage de 80 à 200°C,
d) transformation ultérieure de l'oxyde d'argent formé avec un matériau support électriquement conducteur, un catalyseur contenant des particules d'argent et un polymère contenant du fluor, finement divisé, en une électrode plate consommant de l'oxygène.

2. Procédé selon la revendication 1, **caractérisé en ce que** l'introduction d'énergie dans l'étape a) a lieu via un agitateur à hélice.

3. Procédé selon la revendication 1 ou 2, **caractérisé en ce que** l'introduction d'énergie dans l'étape a) est de 0,01 à 1 kWh par kg de produit précipité.

4. Procédé selon l'une quelconque des revendications 1 à 3, **caractérisé en ce que** le mélange dans l'étape a) est maintenu dans une plage de pH de 10,5 à 11,5.

5. Procédé selon l'une quelconque des revendications 1 à 4, **caractérisé en ce que** la température du mélange dans l'étape a) est maintenue dans une plage de 30°C à 70°C.

6. Procédé selon l'une quelconque des revendications 1 à 5, **caractérisé en ce que** l'oxyde d'argent de l'étape c) présente une valeur d90 inférieure à 13 µm.

7. Procédé selon l'une quelconque des revendications 1 à 6, **caractérisé en ce que** lors de la transformation ultérieure d), on utilise 0,5 à 20 parties en poids du polymère contenant du fluor, 1 à 20 parties en poids d'argent sous forme de particules d'argent et 60 à 98,5 parties en poids d'oxyde d'argent sous forme de particules d'oxyde d'argent.

8. Procédé selon l'une quelconque des revendications 1 à 7, **caractérisé en ce que** lors de la transformation ultérieure d), on utilise le procédé de préparation à sec par compression d'un mélange sous forme de poudre d'oxyde d'argent, d'un catalyseur contenant des particules d'argent et d'un polymère contenant du fluor, finement divisé, avec un matériau support électriquement conducteur en une électrode plate consommant de l'oxygène.
